# EUROPÄISCHE PATENTANMELDUNG

(11) **EP 0 978 674 A1**
(43) Veröffentlichungstag der Anmeldung: **09.02.2000**
(21) Anmeldenummer: 98810759.5
(22) Anmeldetag: 07.08.1998
(51) Int. Cl.: F16L 3/24

(54) **Befestigungsvorrichtung für insbesondere langgestreckte Gegenstände**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Wyder, Hans, 8617 Mönchaltorf (CH); Häusermann, Christian, 8617 Mönchaltorf (CH); Hecht, Reinhard, 93047 Regensburg (DE); Manstorfer, Karl, 93047 Regensburg (DE); Bunschi, Hans, Dr. sc. tech., 8041 Zürich (CH); Weingarten, Marco, 8041 Zürich (CH); Lehman, Peter, 3172 Niederwangen (CH); Maag, Heinz, 3172 Niederwangen (CH)
(74) Vertreter: Patentanwälte Schaad, Balass, Menzl & Partner AG

(57) **Zusammenfassung**

Es wird eine Vorrichtung zum Befestigen von insbesondere langgestreckten Gegenständen, wie Kabel, Rohre, Schläuche, Leitungen oder dergleichen, an einem insbesondere ringförmigen Bridenband (1) beschrieben. Die Befestigungsvorrichtung umfasst ein Halterungselement (17) zum Aufnehmen und Halten der Gegenstände und ein von dem Halterungselement (17) getrennt ausgebildetes, an dem Bridenband (1) vorgesehenes Befestigungselement (4) zum Befestigen des Halterungselements (17) an dem Bridenband (1). Weiterhin wird eine Bride mit einer entsprechenden Befestigungsvorrichtung beschrieben.

## Beschreibung

Die vorliegende Erfindung betrifft eine Vorrichtung zum Befestigen von insbesondere langgestreckten Gegenständen, wie Kabel, Rohre, Schläuche, Leitungen oder dergleichen, an einem Bridenband. Weiterhin ist die Erfindung auf eine Bride mit solchen Befestigungsvorrichtungen gerichtet.

Briden gibt es in verschiedenen Ausführungsformen, z.B. als Innen- oder als Aussenbriden, die beispielsweise in oder um Rohrleitungssysteme, wie beispielsweise Abwasserleitungen und nicht begehbare Rohre, gelegt werden. Das Bridenband ist dabei meist kreisförmig oder spiralförmig ausgebildet und mittels Spannelementen, Befestigungselementen, wie beispielsweise Schrauben oder Nieten, oder durch dem Bridenband innenwohnende Federkraft an der jeweiligen Rohrleitung befestigt.

An dem Bridenband sind Halterungselemente vorgesehen, die zur Aufnahme von langgestreckten Gegenständen, wie Kabel, Rohre, Schläuche, Leitungen oder dergleichen, ausgebildet sind. Die Halterungselemente sind dabei üblicherweise entweder einstückig mit dem Bridenband ausgebildet oder werksseitig an diesem befestigt.

Um eine möglichst grosse Anzahl von langgestreckten Gegenständen an den jeweiligen Briden befestigen zu können, muss werksseitig an jeder Bride eine entsprechende Anzahl von Halterungselementen vorgesehen werden. Ein nachträgliches Anbringen der Halterungselemente an dem Bridenband nach dem Einsetzen des Bridenbandes in das Rohrleitungssystem ist oftmals nicht möglich, da das Bridenband beispielsweise unter Federspannung an der Innenseite der jeweiligen Rohrleitung anliegt und somit beispielsweise ein Umgreifen des Bridenbandes durch entsprechende Abschnitte der Halterungselemente nicht oder nur sehr schwer möglich ist. Ein solches nachträgliches Anbringen wird insbesondere dann noch erschwert, wenn die Rohrleitungen nicht begehbar sind und die Briden daher von ferngesteuerten Bridenrobotern eingesetzt und bestückt werden, die nur bestimmte, relativ einfache Bewegungsvorgänge durchführen können.

Da somit üblicherweise die Briden mit einer so grossen Anzahl von Halterungselementen bestückt werden, um die voraussichtlich maximal erforderliche Anzahl von Kabeln oder dergleichen aufnehmen zu können, in der Praxis jedoch oftmals nur ein geringer Teil dieser maximalen Anzahl tatsächlich verlegt wird, werden oftmals etliche der vorgesehenen Halterungselemente letztlich nicht verwendet. Durch die letztlich nicht benötigten Halterungselemente werden somit die Kosten für die Briden in unnötiger Weise erhöht. Weiterhin ist es insbesondere bei von Flüssigkeit durchströmten Rohren wünschenswert, dass die Briden mit den Halterungselementen den Strömungsfluss der Flüssigkeit möglichst wenig behindern und somit möglichst wenig in den Rohrinnenraum hineinragen. Werden nun eine Vielzahl von Halterungselementen vorgesehen, um die voraussichtlich maximal erforderliche Anzahl von Kabeln befestigen zu können, wird die Verstopfungsgefahr aufgrund der in das Rohrinnere hineinragende Halterungselementen erhöht. Somit steht der Forderung, eine ausreichende Anzahl von Halterungselementen für einen Maximalbestükkung vorzusehen, die Forderung, generell nur so viele Halterungselemente wie aktuell erforderlich anzubringen, entgegen.

Wird andererseits eine zu geringe Anzahl von Halterungselementen an den Briden vorgesehen, so kann dies dazu führen, dass bereits alle Halterungselemente mit Kabeln oder dergleichen belegt sind, und für weitere, zu verlegende Kabel, Rohre, Schläuche oder dergleichen, zusätzliche Briden zu den bereits vorhandenen Briden in das Rohrleitungssystem eingebracht werden müssten. Dies kann aufgrund der bereits vorhandenen Kabel in manchen Fällen mit hohem Aufwand verbunden oder sogar unmöglich sein.

Es ist eine Aufgabe der vorliegenden Erfindung, eine Befestigungsvorrichtung der eingangs genannten Art so auszubilden, dass zum einen eine beliebige Anzahl von langgestreckten Gegenständen an den Bridenbändern befestigt werden kann, wobei die Kosten für entsprechend ausgebildete Briden trotzdem relativ gering gehalten werden sollen.

Diese Aufgabe wird erfindungsgemäss durch eine Befestigungsvorrichtung der eingangs genannten Art gelöst mit einem Halterungselement zum Aufnehmen und Halten der Gegenstände und ein von dem Halterungselement getrennt ausgebildetes, an dem Bridenband vorgesehenes Befestigungselement zum Befestigen des Halterungselements an dem Bridenband.

Erfindungsgemäss wird somit vorgeschlagen, zum Befestigen der langgestreckten Gegenstände an dem Bridenband ein separates Halterungselement vorzusehen, das zum Aufnehmen und Halten der Gegenstände ausgebildet ist. Dabei können unterschiedliche Arten von Halterungselementen verwendet werden, die jeweils entweder speziell an die zu befestigenden langgestreckten Gegenstände angepasst oder als allgemeine Halterungselemente für eine Vielzahl von unterschiedlichen langgestreckten Gegenständen ausgebildet sind. Getrennt von dem jeweiligen Halterunselement ist jeweils ein separates Befestigungselement vorgesehen, das mit dem Bridenband einstückig ausgebildet oder an diesem befestigbar und mit dem Halterungselement koppelbar ist, so dass das Halterungselement über das Befestigungselement an dem Bridenband befestigbar ist.

Dabei ist es sowohl möglich, dass jeweils ein Befestigungselement einem Halterungselement zugeordnet ist als auch dass jeweils mehrere Halterungselemente an einem Befestigungselement befestigbar sind. Grundsätzlich ist es auch möglich, dass ein Halterungselement an mehreren Befestigungselementen befestigbar ist.

Durch die erfindungsgemässe Aufteilung der Halterungseinrichtung in ein Halterungselement und ein davon getrenntes Befestigungselement ist es möglich, werksseitig jeweils eine Vielzahl von relativ einfachen und kostengünstig herzustellenden Befestigungselementen an das Bridenband vorzumontieren. Die Herstellungskosten können hierbei relativ gering gehalten werden, da die eigentlichen Halterungselemente werksseitig nicht an dem Bridenband vorgesehen werden müssen. Weiterhin ragen die Befestigungselemente nur unwesentlich über das Bridenband hinaus, so dass insbesondere bei durchströmten Rohrleitungssystemen der durch die an dem Bridenband festgelegten Befestigungselemente erzeugte Strömungswiderstand vernachlässigbar ist.

Durch die separate Ausbildung von Halterungselement und Befestigungselement ist es möglich, erst beim Verlegen der zu befestigenden langgestreckten Gegenstände die jeweils genau erforderliche Anzahl von Halterungselementen nachträglich an den an dem Bridenband vorgesehenen Befestigungselementen anzubringen. Somit ist durch die Erfindung sowohl eine sehr wirtschaftliche als auch eine sehr flexible Lösung der zugrundeliegenden Aufgabe gegeben.

Nach einer vorteilhaften Ausführungsform der Erfindung ist das Halterungselement auf das Befestigungselement aufsteckbar, insbesondere mit diesem verrastbar. Durch die einfache Aufsteckbarkeit bzw. Verrastbarkeit ist gewährleistet, dass Halterungselement und Befestigungselement in einfacher Weise auch durch einen ferngesteuerten Bridenroboter miteinander verbunden werden können. Durch die Verrastung entfällt beispielsweise ein Verschrauben der beiden Elemente, so dass der Bridenroboter relativ einfach ausgebildet sein kann. Ist ein entsprechend komplexer Bridenroboter vorhanden, so können das Halterungselement und das Befestigungselement auch auf andere Weise, beispielsweise durch eine Verschraubung miteinander verbunden werden.

Das Befestigungselement kann als insbesondere einstückig mit dem Bridenband ausgebildete Befestigungsfläche ausgeformt sein. Diese Befestigungsfläche bildet eine Kopplungsfläche, mit der das Halterungselement bevorzugt verklebbar ist. Dabei kann die Kopplung zwischen dem Halterungselement und der Befestigungsfläche beispielsweise über sogenannte Klebepads erfolgen, die insbesondere flexibel ausgebildet sind, so dass sie einer Krümmung oder sonstigen von einer geradlinigen Form abweichenden Ausgestaltungen des Bridenbandes folgen können. Die Ausbildung der Befestigungselemente als spezielle Klebeflächen hat den Vorteil, dass ein Vorstehen der Befestigungselemente in das Innere der Rohre hinein völlig vermieden wird. Weiterhin ist ein besonders einfaches Anbringen der Halterungseinrichtungen an den Klebeflächen durch einfaches Aufsetzen und Andrücken möglich.

Bevorzugt weisen sowohl das Befestigungselement als auch das Halterungselement eine Zentrieröffnung zur gegenseitigen Zentrierung über ein externes Zentrierelement auf. Dieses externe Zentrierelement kann beispielsweise durch einen Zentrierstift des Bridenroboters gebildet werden. Beim nachträglichen Anbringen der Halterungselemente an den Befestigungselementen kann der Bridenroboter das anzubringende Halterungselement auf den Zentrierstift aufschieben und diesen in die Zentrieröffnung eines an dem Bridenband festgelegten Befestigungselements einführen. Dadurch ist automatisch eine exakte Positionierung des Halterungselements bezüglich des zugeordneten Befestigungselements gegeben. Grundsätzlich kann auch ein entsprechendes Zentrierelement, beispielsweise in Form eines Zentrierstiftes, an dem Halterungselement und/oder an dem Befestigungselement ausgebildet sein, so dass beim Aufsetzen des Halterungselements auf das Befestigungselement durch Zusammenwirken des Zentrierelementes und der entsprechenden Zentrieröffnung eine automatische Zentrierung dieser beiden Elemente gegeneinander erfolgt.

Nach einer weiteren vorteilhaften Ausführungsform der Erfindung sind an dem Halterungselement Kopplungselemente, insbesondere in Form von Laschen, und an dem Befestigungselement Aufnahmeelemente für die Kopplungselemente, insbesondere in Form von Öffnungen, ausgebildet. Dabei sind nach Einsetzen der Kopplungselemente in die Aufnahmeelemente das Halterungselement und das Befestigungselement so gegeneinander bewegbar, insbesondere um eine gemeinsame Drehachse verdrehbar, das die Kopplungselemente Hinterschneidungen bezüglich des Befestigungselementes bilden.

Insbesondere wenn die Drehachse durch die Mittelachsen der Zentrieröffnungen gebildet ist, ist somit ein besonders einfaches Verbinden von Habterungselement und Befestigungselement möglich, da der die Verbindung vornehmende Bridenroboter ausschliesslich eine Radialbewegung und eine sich daran anschliessende Rotationsbewegung ausführen muss. Aufwendige Steuerungen des Montagearms des Bridenroboters zum Abfahren komplexer Fahrwege sind auf diese Weise nicht erforderlich.

Nach einer weiteren bevorzugten Ausführungsform der Erfindung umfasst das Befestigungselement zumindest ein Positionierungsorgan, das in Zusammenwirkung mit zumindest einem an dem Bridenband vorgesehenen Positionierungsgegenstück zum eindeutigen Positionieren des Befestigungselements an dem Bridenband ausgebildet ist. Auf diese Weise ist werksseitig oder zumindest vor dem Montieren des Bridenbandes eine einfache und eindeutige Festlegung des Befestigungselements an dem Bridenband möglich. Wird das Bridenband so an dem Rohrleitungssystem befestigt, dass es nicht vollflächig an der Innen- oder Aussenseite der jeweiligen Rohrleitung anliegt, so ist selbst nach erfolgter Montage des Bridenbandes noch eine relativ einfache Festlegung des jeweiligen Befestigungselementes möglich.

Bevorzugt ist das Positionierungsorgan als Ansatz ausgebildet, der bei an dem Bridenband festgelegtem Befestigungselement in eine in dem Bridenband vorgesehene, das Positionierungsgegenstück bildende Öffnung eingreift. Auf diese Weise ist eine sehr einfache und kostengünstige Ausbildung des Befestigungselements möglich, da keine separaten Positionierungsorgane erforderlich sind. Trotz dieser einfachen Ausbildung ist eine eindeutige Festlegung der Befestigungselemente bezüglich des Bridenbandes möglich.

Nach einer weiteren bevorzugten Ausführungsform der Erfindung umfasst das Befestigungselement ein Federelement, mit dem das Befestigungselement unter Vorspannung an dem Bridenband festlegbar ist. Dadurch ist gewährleistet, dass auch bei noch nicht montiertem Bridenband die Befestigungselemente an dem Bridenband festgehalten sind und nicht eventuell beim Transport durch den Bridenroboter aus ihrer vorgegebenen Stellung des Bridenbandes verrutschen oder sich völlig ablösen können. Nach erfolgter Montage des Bridenbandes ist insbesondere dann, wenn das Bridenband flächig an der Innen- oder Aussenseite der jeweiligen Rohrleitung anliegt, die Federwirkung nicht mehr erforderlich, da das Befestigungselement in diesem Zustand zwischen dem Bridenband und der Rohrleitungswand eingeklemmt und damit festgehalten ist.

Vorteilhaft besitzt das Befestigungselement einen im wesentlichen C-förmigen Querschnitt mit einem Basisteil und zumindest zwei freien Schenkeln, wobei die Positionierungsorgane an den freien Schenkeln, insbesondere als nach innen ragende Umbiegungen der Schenkelenden, ausgebildet sind. Das Befestigungselement kann dadurch als Stanzteil ausgebildet sein, das sehr kostengünstig herstellbar ist.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher erläutert; in diesen zeigen:
- Figur 1: einen Abschnitt eines Bridenbandes,
- Figur 2: eine Seitenansicht eines erfindungsgemäss ausgebildeten Befestigungselements,
- Figur 2a: das Befestigungselement nach Fig. 2 mit eingeschobenem Bridenband,
- Figur 3: eine Draufsicht auf das Befestigungselement gemäss Figur 2,
- Figur 4: eine Vorderansicht eines Befestigungselements gemäss Figur 2,
- Figur 5: eine Vorderansicht auf ein erfindungsgemäss ausgebildetes Halterungselement,
- Figur 6: eine Draufsicht auf das Halterungselement gemäss Figur 5,
- Figur 7: eine Seitenansicht des Halterungselements gemäss Figur 5,
- Figur 8: eine weitere Ausführungsform eines erfindungsgemäss ausgebildeten Halterungselements,
- Figur 9: eine weitere Ausführungsform eines erfindungsgemäss ausgebildeten Halterungselements,
- Figur 10: eine Draufsicht auf ein Befestigungselement zum Aufsetzen auf ein Halterungselement nach Figur 9,
- Figur 11: eine Draufsicht auf eine weitere Ausführunsform eines Bridenbandes mit aufgesetzten Befestigungs- und Halterungselementen.

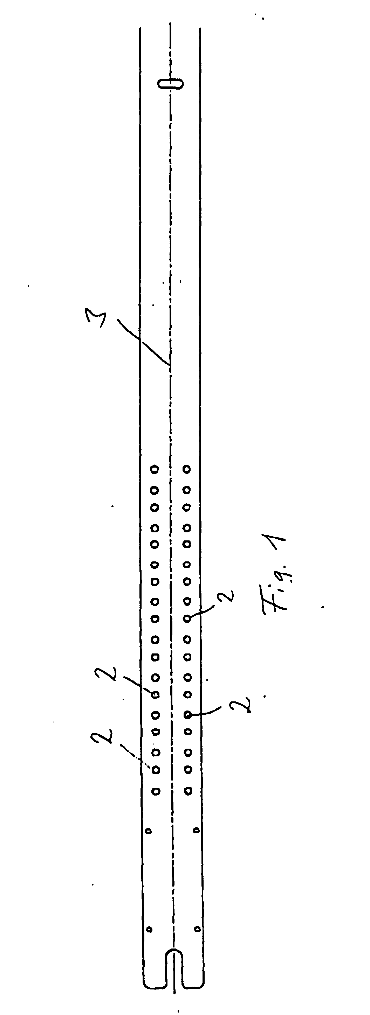

Figur 1 zeigt einen Teil eines Bridenbandes 1 in abgewickeltem Zustand. Das Bridenband 1 umfasst eine Vielzahl von als Löcher ausgebildete Öffnungen 2, wobei die Öffnungen 2 jeweils zwei sich parallel zur Längsachse 3 des Bridenbandes 1 erstreckende Lochreihen bilden.

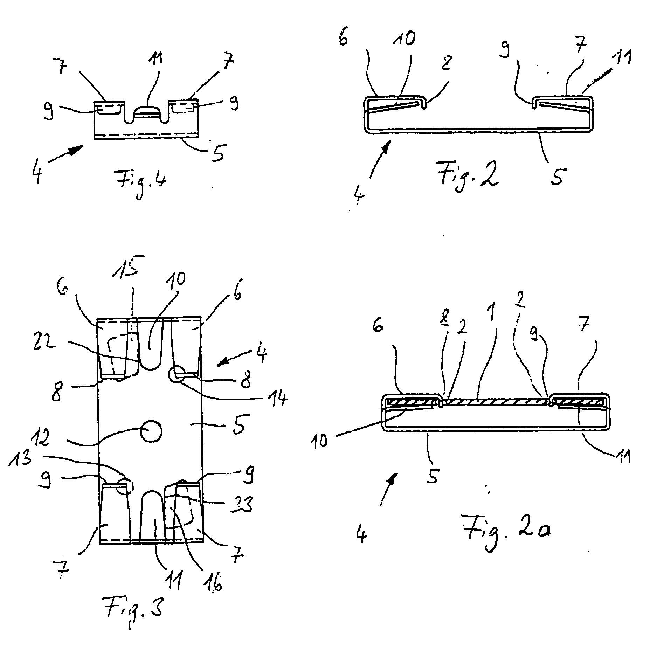

Figur 2 zeigt ein erfindungsgemäss ausgebildetes Befestigungselement 4, das C-förmig ausgebildet ist und ein ebenes Basisteil 5 sowie sich daran anschliessende Schenkel 6, 7 umfasst. An den freien Enden der Schenkel 6, 7 sind nach innen ragende Umbiegungen 8, 9 ausgebildet, die Positionierungsorgane des Befestigungselements 4 bilden.

Weiterhin sind sich von dem Bereich zwischen dem Basisteil 5 und den Schenkeln 6, 7 aus erstreckende, zungenförmige Federelemente 10, 11 ausgebildet, die schräg in Richtung der Umbiegungen 8, 9 hin verlaufen.

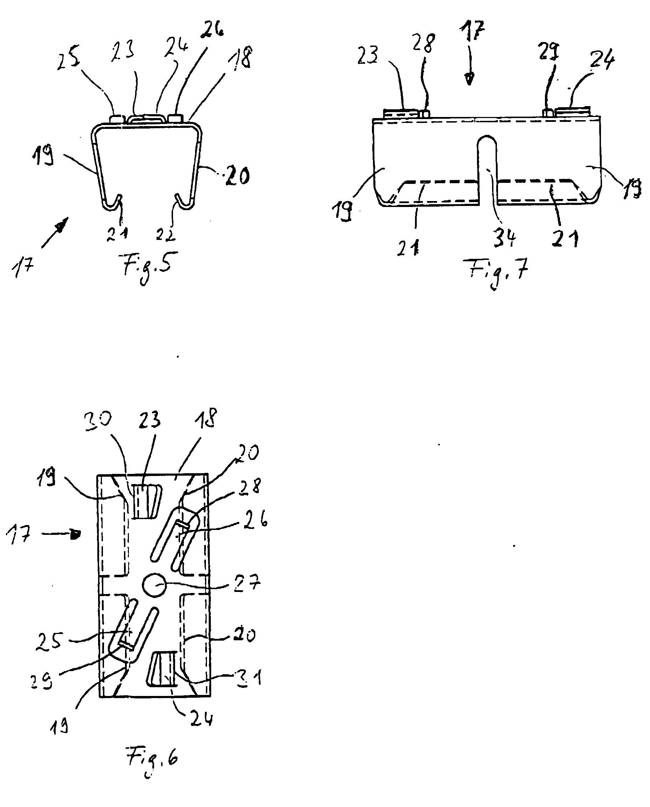

Aus Figur 3 ist zu erkennen, dass an jeder Seite des Basisteils 5 jeweils zwei Schenkel 6, 7 beabstandet voneinander ausgebildet sind, wobei die ebenfalls zungenförmig ausgebildeten Federelemente 10, 11 jeweils in dem Abstand zwischen den Schenkeln 6 bzw. 7 angeordnet sind.

Das Basisteil 5 besitzt in seiner Mitte eine kreisförmige Zentrieröffnung 12 und zu dieser im gleichen Abstand auf einer Diagonalen von einer Ecke des rechteckigen Basisteils 5 zu der diagonal gegenüberliegenden Ecke angeordnet zwei kreisförmige Rastlöcher 13, 14.

Ebenfalls im gleichen Abstand zu der Zentrieröffnung 12 und auf der zweiten Diagonale des Basisteils 5 sind zwei ungefähr kreisringsektorförmig ausgebildete Durchbrechungen 15, 16 in dem Basisteil 5 ausgebildet, wobei die der Zentrieröffnung 12 zugewandten sowie die der Zentrieröffnung 12 abgewandten Kanten der Durchbrechungen 15, 16 jeweils im wesentlichen einen Kreisaussehnitt aus zwei gedachten Kreisen um die Zentrieröffnung 12 bilden.

Die direkte Anformung des Federelements 11 sowie der Schenkel 6 an das Basiselement 5, die durch Umbiegungen eines Stanzteils erzeugt werden, ist der Figur 4 zu entnehmen.

Figur 2a zeigt das Befestigungselement 4 nach Figur 2 in seinem auf ein Bridenband 1 aufgesetzten Zustand.

Das Befestigungselement 4 wird auf das Bridenband 1 so aufgeschoben, dass die Umbiegungen 8, 9 in zwei Öffnungen 2 des Bridenbandes 1 zu liegen kommen. Dabei werden die Federelemente 10, 11 nach unten verbogen, so dass aufgrund der Federspannung und der in die Öffnungen 2 eingreifenden Umbiegungen 8, 9 das Befestigungselement 4 sicher in der gewünschten Position an dem Bridenband 1 festgelegt ist. Ein Verrutschen oder Ablösen des Befestigungselements 4 von dem Bridenband 1 ist durch diese Einspannung praktisch ausgeschlossen.

Weiterhin ist aus Figur 2a zu erkennen, dass bei auf dem Bridenband 1 aufgesetztem Befestigungselement 4 ein Freiraum zwischen den Federelementen 10, 11 bzw. dem Bridenband 1 und dem Basisteil 5 verbleibt, in den beispielsweise das freie Ende des Bridenbandes 1 eingeführt werden kann. Dies kann beispielsweise dann nützlich sein, wenn das Bridenband 1 vor seiner Montage spiralförmig aufgewickelt ist.

Weiterhin wird durch den Freiraum zwischen dem Basisteil 5 sowie den Federelementen 10, 11 bzw. dem Bridenband 1 erreicht, dass ein ausreichender Eingriffsabstand für das in den Figuren 5 bis 7 nachfolgend beschriebene Halterungselement vorhanden ist, auch wenn das Bridenband 1 in seinem montierten Zustand vollflächig an der Innenwand einer Rohrleitung anliegt.

Figur 5 zeigt ein erfindungsgemäss ausgebildetes Halterungselement 17, das U-förmig mit einem Basisteil 18 und zwei freien Schenkeln 19, 20 ausgebildet ist.

Die Schenkel 19, 20 weisen an ihren freien Enden Umbiegungen 21, 22 auf. Die Schenkel 19, 20 sind federnd so ausgebildet, dass ihre freien Enden aufeinander zulaufen, so dass die zu haltenden Gegenstände zwischen die Schenkel 19, 20 eingeklippt und aufgrund der Federkraft der Schenkel 19, 20 von diesen gehalten werden können.

An dem Basisteil 18 sind durch einen Stanz- und Biegevorgang gebildete Laschen 23, 24 ausgebildet sowie ebenfalls durch einen Stanz- und Biegevorgang gebildete Rastzungen 25, 26.

Die Ausbildung der Laschen 23, 24 und der Rastzungen 25, 26 ist der Figur 6 näher zu entnehmen. Aus Figur 6 ist zu erkennen, dass sowohl die Laschen 23, 24 als auch die Enden 28, 29 der Rastzungen 25, 26 durch Ausstanzungen in dem Basisteil 18 und entsprechende Umbiegungen gebildet werden.

In dem Basisteil 18 ist eine Zentrieröffnung 27 ausgebildet, wobei sowohl die Laschen 23, 24 als auch die umgebogenen Enden 28, 29 der Rastzungen 25, 26 jeweils im gleichen Abstand von der Zentrieröffnung 27 liegend ausgebildet sind. Die umgebogenen Enden 28, 29 der Rastzungen 25, 26 sind dabei entsprechend der Positionen der Rastlöcher 13, 14 des Befestigungsteils 4 angeordnet, während bei einem kongruenten Übereinanderlegen des Basisteils 18 und des Basisteils 5 die Biegekanten 30, 31 der Laschen 23, 24 an den Längskanten 32, 33 der Durchbrechungen 15, 16 zur Anlage kommen.

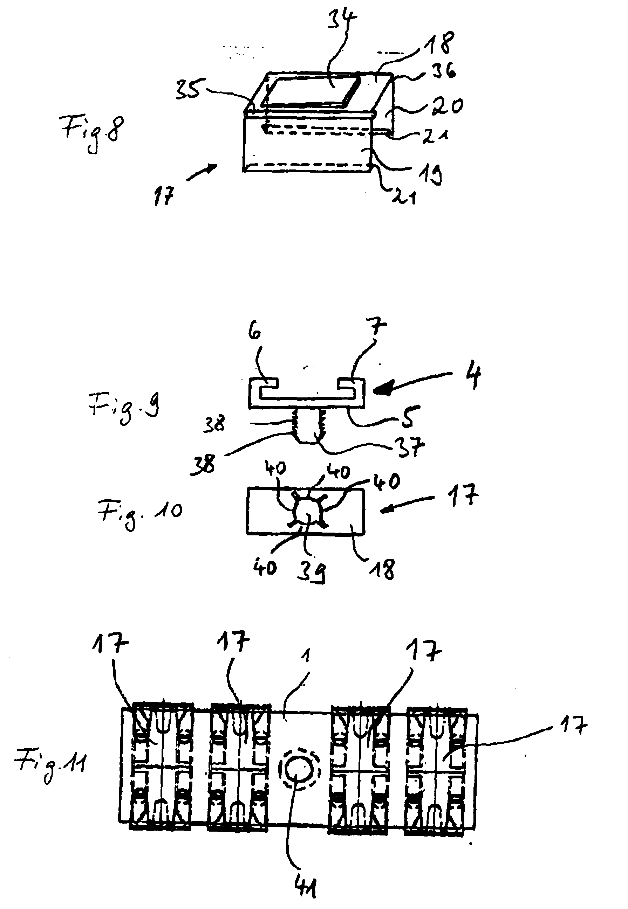

Aus Figur 7 ist deutlich zu erkennen, dass der Schenkel 19 eine zweiteilige Form mit einer U-förmigen Ausnehmung 34 besitzt. Entsprechend ist auch der in Figur 7 nicht sichtbare Schenkel 20 mit einer U-förmigen Ausnehmung ausgebildet.

Wie den Figuren zu entnehmen ist, sind sowohl das Halterungselement 17 als auch das Befestigungselement 4 jeweils um die Zentrieröffnungen 27 bzw. 12 symmetrisch ausgebildet. Grundsätzlich ist es jedoch auch möglich, das Halterungselement 17 sowie das Befestigungselement 4 unsymmetrisch auszubilden, solange gewährleistet ist, dass die zusammenwirkenden Elemente, nämlich die Laschen 23, 24 sowie die Durchbrechungen 15, 16, die Rastzungen 25, 26 sowie die Rastlöcher 13, 14 und die Zentrieröffnungen 27 und 12 bei aufeinandergelegten Halterungs- und Befestigungselementen 17, 4 in Deckung miteinander liegen.

Die erfindungsgemässe Befestigungsvorrichtung wird wie folgt verwendet: Bevorzugt wird werksseitig eine Vielzahl von Befestigungselementen 4 auf ein Bridenband 1 so weit aufgeschoben, dass sich die Befestigungselemente 4 jeweils in der gewünschten Position an dem Bridenband 1 befinden und dabei die Umbiegungen 8, 9 der Schenkel 6, 7 der Befestigungselemente 4 in Öffnungen 2 des Bridenbands 1 eingreifen. In diesem Zustand sind die Befestigungselemente 4 aufgrund der Federspannung der Federelemente 10, 11, zwischen diesen und den Schenkeln 6, 7 eingespannt und gesichert.

Wahlweise können zusätzlich zu den erfindungsgemäss ausgebildeten Befestigungsvorrichtungen auch noch Halteeinrichtungen gemäss dem Stand der Technik an dem Bridenband vorgesehen sein, die einteilig ausgebildet und entweder an dem Bridenband 1 befestigt oder mit diesem einstückig ausgebildet sind.

Nachdem das Bridenband 1 beispielsweise von einem Bridenroboter in eine Rohrleitung eingesetzt wurde, können die erfindungsgemässen Halterungselemente 17 nachträglich auf die an dem Bridenband 1 vorgesehenen Befestigungselemente 4 aufgesetzt werden.

Dazu wird jeweils ein Halterungselement 17 mit seiner Zentrieröffnung 27 auf einen an dem Montagearm des Bridenroboters vorgesehenen Zentrierstift aufgesetzt, woraufhin der Zentrierstift ferngesteuert in die Zentrieröffnung 12 eines der Befestigungselemente 4 eingeführt wird. Durch vollständiges, radiales Ausfahren des Montagearms des Bridenroboters wird somit das Halterungselement 17 zentriert auf das Befestigungselement 4 aufgesetzt, wobei durch Rotieren des Montagearms die Lage des Halterungselements 17 so gewählt werden kann, dass die Laschen 23, 24 in den Durchbrechungen 15, 16 zu liegen kommen. In dieser Stellung liegen die umgebogenen Enden 28, 29 der Rastzungen 25, 26 aufgrund der Federwirkung der Rastzungen 25, 26 unter Vorspannung an der Unterseite des Basisteils 5 des Befestigungselements 4 an.

Durch Drehen des Montagearms des Bridenroboters wird anschliessend das Halterungselement 17 um den Zentrierstift solange verdreht, bis die Biegekanten 30, 31 der Laschen 23, 24 an den Längskanten 32, 33 der Durchbrechungen 15, 16 zur Anlage kommen. In dieser Stellung hintergreifen die Laschen 23, 24 das Basisteil 5, so dass ein Abnehmen des Halterungselements 17 von dem Befestigungselement 4 in radialer Richtung nicht mehr möglich ist.

Gleichzeitig rasten die umgebogenen Enden 28, 29 der Rastzungen 25, 26 in die Rastlöcher 13, 14 ein, so dass ein Zurückdrehen des Halterungselements 17 verhindert wird.

Das Befestigungselement 4 ist somit mit dem Halterungselement 17 fest verbunden, so dass der Montagearm des Bridenroboters mit dem Zentrierstift aus den Zentrieröffnungen 12, 27 entnommen werden kann.

In die derart montierten Halterungselemente 17 können anschliessend die zu haltenden langgestreckten Gegenstände in üblicher Weise eingesetzt werden.

Das Halterungselement 17 nach Figur 8 besitzt an seinem Basisteil 18 ein keilförmiges Kopplungselement 34 sowie im Übergangsbereich zwischen dem Basisteil 18 und den Schenkeln 19, 20 rinnenförmige Führungsnuten 35, 36.

Zum Aufsetzen des Halterungselements 17 auf ein entsprechendes Befestigungselement 4 sind an diesem in die Führungsnuten 35, 36 eingreifende Führungsansätze ausgebildet, so dass das Halterungselement 17 auf das Bridenband 1 aufgeschoben werden kann. Die Führungsansätze können dabei in beliebiger Richtung zur Längsachse des Bridenbandes 1 angeordnet sein, sind jedoch bevorzugt senkrecht zur Längsachse des Bridenbandes ausgerichtet.

Das keilförmige Kopplungselement 34 wirkt mit einem an dem Befestigungselement 4 ausgebildeten Gegenelement zusammen, das beispielsweise als elastischer Gegenanschlag ausgebildet ist und nach vollständigem Aufschieben des Halterungselement 17 auf das Bridenband 1 bzw. auf das Befestigungselement 4 mit dem Kopplungselement 34 verrastet und dieses sperrend hintergreift, so dass ein Abziehen des Halterungselementes 17 verhindert wird.

Entsprechend kann das keilförmige Kopplungselement auch an dem Befestigungselement 4 oder unmittelbar an dem Bridenband 1 ausgebildet sein und mit einem entsprechenden Gegenelement, beispielsweise einer elastischen Metallzunge, an dem Basisteil 18 des Halterungselement 17 zusammenwirken.

Das Befestigungselement gemäss Figur 9 besitzt an seinem Basisteil 5 einen insbesondere zylinderförmigen Dorn 37, der an seiner Manteloberfläche rinnförmige Vertiefungen 38 aufweist.

Als Gegenstück ist gemäss Figur 10 in dem Basisteil 18 des Halterungselements 17 eine Öffnung 39 ausgebildet, deren Kanten als blattfederartige Rastlippen 40 ausgebildet sind. Beim Aufstecken des Halterungselements 17 auf den Dom 37 des Befestigungselements 4 rasten die blattfederartigen Rastlippen 40 in den ringförmigen Vertiefungen 38 ein, so dass auf diese Weise das Halterungselement 17 sicher mit dem Befestigungselement 4 verbunden ist.

Grundsätzlich können der Dorn 37 und die Öffnung 39 auch miteinander vertauscht sein, d. h., dass der Dorn 37 an dem Halterungselement 17 und die Öffnung 39 an dem Befestigungselement 4 ausgebildet ist. Um in diesen Fall eine ausreichende Eintauchtiefe für den Dorn 37 zu gewährleisten, kann dabei an dem Basisteil 5 des Befestigungselements 4 ein Ansatz, beispielsweise in Form eines Zapfens, vorgesehen sein, in dem die Öffnung 39 ausgebildet ist. Durch die Länge dieses Ansatzes kann dann die für den Dorn 37 erforderliche Eintauchtiefe vorgegeben werden.

Aus Figur 11 ist zu erkennen, dass das Bridenband 1 auch Öffnungen 41 aufweisen kann, über die es mit Schrauben oder sonstigen Befestigungsmitteln an beispielsweise einer Rohrwand befestigt werden kann. Dies ist insbesondere beim Einsatz der Briden in begehbare Rohre, die üblicherweise einen relativ grossen Durchmesser besitzen, sinnvoll, da in diesen Fall die Briden sich nicht über den gesamten Rohrumfang erstrecken, sondern eine beschränkte Länge besitzen. Eine Befestigung des Bridenbandes mittels Vorspannung in Radialrichtung nach aussen ist in diesem Falle nicht möglich und auch nicht sinnvoll.

Die erfindungsgemässen Befestigungsvorrichtungen können auch bei solchen Briden beschränkter Länge, die nicht in sich geschlossen sind, in gleicher Weise wie bei geschlossen Briden verwendet werden.

## Patentansprüche

1. Vorrichtung zum Befestigen von insbesondere langgestreckten Gegenständen, wie Kabel, Rohre, Schläuche, Leitungen oder dergleichen, an einem insbesondere ringförmigen Bridenband (1),
**gekennzeichnet durch**
ein Halterungselement (17) zum Aufnehmen und Halten der Gegenstände und ein von dem Halterungselement (17) getrennt ausgebildetes, an dem Bridenband (1) vorgesehenes Befestigungselement (4) zum Befestigen des Halterungselements (17) an dem Bridenband (1).

2. Vorrichtung nach Anspruch 1,
**dadurch gekennzeichnet,**
dass das Befestigungselement (14) von dem Bridenband (1) getrennt ausgebildet und an diesem in einer eindeutigen Position festlegbar ist, insbesondere dass das Halterungselement (17) auf das Befestigungselement (4) aufsteckbar und vorzugsweise mit diesem verrastbar ist.

3. Vorrichtung nach Anspruch 1 oder 2,
**dadurch gekennzeichnet,**
dass sowohl das Befestigungselement (4) als auch das Halterungselement (17) eine Zentrieröffnung (12, 27) zur gegenseitigen Zentrierung über ein externes Zentrierelement aufweisen.

4. Vorrichtung nach einem der vorhergehenden Ansprüche,
**dadurch gekennzeichnet,**
dass an dem Halterungselement (17) Kopplungselemente, insbesondere in Form von Laschen (23, 24), ausgebildet sind, dass an dem Befestigungselement (4) Aufnahmeelemente für die Kopplungselemente, insbesondere in Form von Öffnungen (15, 16), ausgebildet sind, und dass nach Einsetzen der Kopplungselemente in die Aufnahmeelemente das Halterungselement (17) und das Befestigungselement (4) so gegeneinander bewegbar, insbesondere um eine gemeinsame Drehachse verdrehbar sind, dass die Kopplungselemente Hinterschneidungen bezüglich des Befestigungselements (4) bilden, und/oder
dass an dem Befestigungselement Kopplungselemente, insbesondere in Form von Laschen, ausgebildet sind, dass an dem Halterungselement Aufnahmeelemente für die Kopplungselemente, insbesondere in Form von Öffnungen, ausgebildet sind, und dass nach Einsetzen der Kopplungselemente in die Aufnahmeelemente das Befestigungselement und das Halterungselement so gegeneinander bewegbar, insbesondere um eine gemeinsame Drehachse verdrehbar sind, dass die Kopplungselemente Hinterschneidungen bezüglich des Halterungselements bilden,
wobei die Drehachse jeweils bevorzugt durch die Mittelachsen der Zentrieröffnungen (12, 27) gebildet wird.

5. Vorrichtung nach einem der vorhergehenden Ansprüche,
**dadurch gekennzeichnet,**
dass das Befestigungselement (4) zumindest ein Positionierungsorgan (8, 9) umfasst, das in Zusammenwirkung mit zumindest einem an dem Bridenband (1) vorgesehenen Positionierungsgegenstück (2) zum eindeutigen Positionieren des Befestigungselements (4) an dem Bridenband (1) ausgebildet ist, insbesondere dass das Positionierungsorgan (8, 9) als Ansatz ausgebildet ist, der bei an dem Bridenband (1) festgelegtem Befestigungselement (4) in eine in dem Bridenband (1) vorgesehene, das Positionierungsgegenstück bildende Öffnung (2) eingreift.

6. Vorrichtung nach Anspruch 5,
**dadurch gekennzeichnet,**
dass das Befestigungselement (4) einen im wesentlichen C-förmigen Querschnitt mit einem Basisteil (5) und zumindest zwei freien Schenkeln (6, 7) besitzt und dass die Positionierungsorgane an den freien Schenkeln (6, 7), vorzugsweise als nach innen ragende Umbiegungen (8, 9) der Schenkelenden, ausgebildet sind, insbesondere dass die Zentrieröffnung (12) bevorzugt im wesentlichen mittig in dem Basisteil (5) angeordnet ist und/oder dass die Aufnahmeelemente (15, 16) an dem Basisteil (5) ausgebildet sind und/oder dass die Kopplungselemente an dem Basisteil ausgebildet sind.

7. Vorrichtung nach einem der vorhergehenden Ansprüche,
**dadurch gekennzeichnet,**
dass das Befestigungselement (4) ein Federelement (10, 11) umfasst, mit dem das Befestigungselement (4) unter Vorspannung an dem Bridenband (1) festlegbar ist.

8. Vorrichtung nach einem der vorhergehenden Ansprüche,
**dadurch gekennzeichnet,**
dass das Halterungselement (17) einen im wesentlichen U-förmigen Querschnitt besitzt und ein Basisteil (18) und zumindest zwei sich daran anschliessende freie Halterungsschenkel (19, 20) umfasst, wobei die Zentrieröffnung (27) und/oder die Kopplungselemente (23, 24) und/oder die Aufnahmeelemente (15, 16) insbesondere an dem Basisteil (18) vorgesehen sind und/oder die Halterungsschenkel (19, 20) Federelemente bilden und zu ihren freien Enden hin zusammenlaufend ausgebildet sind.

9. Vorrichtung nach einem der vorhergehenden Ansprüche,
**dadurch gekennzeichnet,**
dass das Befestigungselement (4) einstückig mit dem Bridenband (1) und/oder als Befestigungsfläche, insbesondere zur klebenden Verbindung mit dem Halterungselement (17), ausgebildet ist.

10. Bride mit einem Bridenband (1) und zumindest einem Befestigungselement (4) für ein Halterungselement (17) zum Aufnehmen und Halten von insbesondere langgestreckten Gegenstände,
**dadurch gekennzeichnet,**
dass das Befestigungselement (4) gemäss den das Befestigungselement (4) betreffenden Merkmalen nach einem der vorhergehenden Ansprüche ausgebildet ist.

11. Bride nach Anspruch 10,
**dadurch gekennzeichnet,**
dass mehrere Befestigungselemente (4) nach einem der Ansprüche 1 bis 9 an dem Bridenband (1) angeordnet sind, insbesondere dass zusätzlich zu diesen Befestigungselementen (4) an dem Bridenband (1) weitere Befestigungselemente vorgesehen sind, die einstückig mit Halterungselementen für die langgestreckten Gegenstände und insbesondere einstückig mit dem Bridenband (1) ausgebildet sind.

12. Verwendung einer Bride nach den Ansprüchen 10 oder 11 zum Halten von langgestreckten Gegenständen, insbesondere von Kabeln, Rohren, Schläuchen, Leitungen oder dergleichen, in Rohrleitungssystemen und vorzugsweise in nichtbegehbaren Rohren.
